# EUROPEAN PATENT APPLICATION

(11) **EP 2 335 502 A1**
(43) Date of publication of application: **22.06.2011**
(21) Application number: 09178240.9
(22) Date of filing: 07.12.2009
(51) Int. Cl.: A23L 1/29, A23L 1/30

(54) **An infant formula delivery system comprising probiotics and an infant nutritional formulation**

(71) Applicant: Nestec S.A., 1800 Vevey (CH)
(72) Inventor: Lanctuit, Hélène Beatrice, 3012 Bern (CH); Manser, Daniel, Roland, 3700 Spiez (CH)
(74) Representative: Corticchiato, Olivier

(57) **Abstract**

The invention relates to a probiotic infant formula kit, comprising, in one common container, but separated from each other by means of at least one partitioning element:
- multiple doses of an infant formula in powder form, and
- multiple doses of at least one type of probiotics, wherein the probiotics are present in its own packaging, wherein the packaging is designed such that the probiotic contained therein is released in discrete incremental amounts, the incremental amounts being visible to the human eye.

## Description

The present invention generally relates to the field of infant formulas.

From the prior art it is known to admix powdered probiotics into infant formula in powdered form.

Probiotic micro-organisms are micro-organisms which beneficially affect a host by improving its intestinal microbial balance (Fuller, R; 1989; /. Applied Bacteriology, 66: 365-378). According to the currently adopted definition by FAO/WHO, probiotics are: "Live microorganisms which when administered in adequate amounts confer a health benefit on the host". Often probiotic micro-organisms ("probiotics") produce organic acids such as lactic acid and acetic acid which inhibit the growth of pathogenic bacteria such as Clostridium perfringens and Helicobacter pylori. Consequently, probiotic bacteria are believed to be useful in the treatment and prevention of conditions caused by pathogenic bacteria. Further, probiotic micro-organisms are believed to inhibit the growth and activity of putrefying bacteria and hence the production of toxic amine compounds. It is also believed that probiotic bacteria activate the immune function of the host.

Several infant and follow-up formulas which contain probiotic microorganisms are also commercially available; for example the BIO NAN® formula (Société des Produits Nestle SA).

Typical representatives of probiotics in the area of infant formula are lactic-acid producing bacteria, such as e.g. probiotic Bifidobacterium lactis, BIFIDUS BL.

However, if the infant formula/probiotics mix is heated to elevated temperatures, e.g. more than 70°C, upon reconstitution of the infant formula e.g. with hot water, there is the danger of detrimental effects to the viability of the probiotics.

One potential solution could reside in the use of heat-resistant probiotics. However, this at least drastically reduces the range of available probiotics (such as e.g. sporeforming microbials) and their associated beneficial effects.

Therefore the invention proposes a solution for at least reducing this problem and at the same time not imposing restrictions as to the heat tolerance of the live or at least viable probiotics.

As at least one step of a solution, the invention proposes a package, in which the infant formula and the probiotic is offered separately (i.e. separated by at least one portioning element of a packaging), but still associated to each other.

When offering the infant formula and the probiotics separately, i.e. especially not in a mixed state, there's a potential problem of the user not, or at least not in the proper dosage, admixing the probotics to the infant formula after having reconstituted the infant formula, which usually will be presented in dry form (powder, tablet,...)

The invention also proposes measures for at least reducing this problem.

In any case the object is achieved by means of the features of the independent claims. The dependent claims develop further the central idea of the invention.

A first aspect of the invention relates to an infant formula kit, comprising, in one common container, but separated from each other by means of at least one partitioning element:
- multiple doses of an infant formula, and
- multiple doses of the at least one type of (live or at least viable) probiotics,
wherein the probiotic is present in its own packaging, wherein the packaging is designed such that the probiotic contained therein is released in discrete incremental amounts, the incremental amounts being visible to the human eye.

The probiotic may be present in dry form, e.g. as a powder or tablets, and preferably packaged in a blister packaging or individual or associated sachets.

The probiotic may be present in single dose packages, which single dose packages are physically associated with each other.

The probiotic may be is present in liquid or viscous form, and is preferably packaged in a dropper or capsules.

The packaged probiotic may be arranged in the common container such that it is visible to the consumer when the consumer seeks to access the infant formula.

Furthermore a scoop may be provided in the common container.

The packaged probiotic and optionally also a scoop can be arranged in the common container such that they are accessible, upon opening of the common container before the infant formula is accessible.

The holding capacity *h* of the scoop and the incremental amounts *a* can be set such that, when *m* times the incremental amounts *a* of the probiotic are admixed to *n* times the scoop's capacity *h* of the infant formula, the resulting probiotic food formula dosage contains between 10e4 and 10e11, preferably between 10e6 and 10e10 CFUs (Colony forming Units) of probiotics, *m* and *n* being integer numbers equal to or greater than one.

"m" may be set to 1, i.e. an individually packaged dose of the probiotics (4) may contain between 10e4 and 10e11, preferably between 10e6 and 10e10 CFUs and thus exactly the desired dosage of probiotics per feeding.

Further advantages, objects and features of the invention will become evident to the skilled person when going through the enclosed detailed description of embodiments of the invention, when taken in conjunction with the figures of the enclosed drawings.
Figure 1 shows an embodiment of the invention in which the probiotics are delivered in liquid form by means of a dropper,
Figure 2 shows an embodiment of the invention in which the probiotics are delivered in liquid form by means of capsules,
Figure 3 shows an embodiment of the invention in which the probiotics are delivered in dry form by means of tablets in a blister packaging,
Figure 4 shows an embodiment of the invention in which the probiotics are delivered in dry form by means proportioned sachets, and.
Figure 5 shows a schematic view of an probiotic infant formula kit according to the invention.

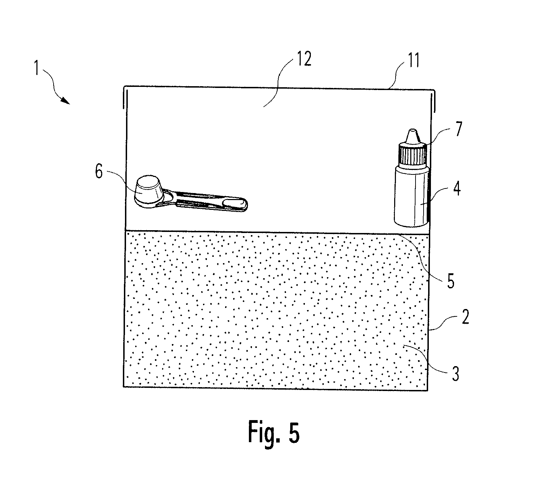

With reference to the figures, and to start with, referring to the schematic view of figures 5, now preferred embodiments of the invention will be explained.

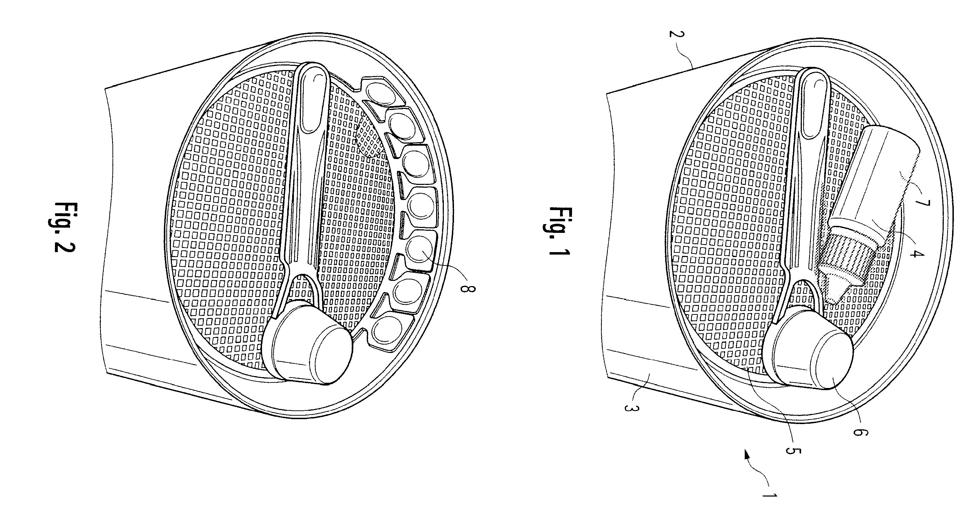

All figures 1 to 5 generally show an probiotic infant formula kit 1 contained in a common container 2.

The infant formula powder 3 thereby is comprised in the common container 2 separate to a space 12 in which packaged probiotics 4 are arranged. The amount of infant formula powder 3 represents multiple doses. Correspondingly, multiple doses of at least one type of probiotics are provided in the packaging. As will be explained in detail and referring to examples later on, the packaging for the probiotics is designed such that the probiotics contained therein are released in discrete incremental amounts, wherein the incremental amounts being large enough to be visible to the naked human eye. An integer number *m* of the released incremental amounts *a* of the probiotics corresponds to the required total amount necessary to achieve a defined CFU number when the probiotics are admixed to an amount of infant formula powder representing one feeding.

When the probiotics are packaged in separated individual packagings, *m* preferably is 1. If the probiotics are packaged in one single packaging, such as e.g. a bottle, *m* preferably is between 1 and 20, more preferred between 2 and 15. Thus, as to a correct dosage it is preferred that the probiotics 4 are packaged in individual doses, each dose being such that it contains the CFU number desired for one feeding, such as e.g. between 10e4 and 10e11, preferably between 10e6 and 10e10 CFUs per feeding.

When a scoop 6 is contained in the infant formula kit, an integer number *n* of the scoop's holding *h* capacity equals to the required amount of infant formula powder for one feeding.

In the shown examples the separation between the infant formula 3 and the package probiotics 4 is achieved via a partitioning element 5, which can be a separation wall, such as for example a sealed or recloseable membrane made e.g. from a metal such as aluminum.

As shown in figure 5, typical a closing member 11 such as for example a removable lid will be provided in order to enclose the common container 2 and especially the separated space 12 for the package probiotics 4.

In addition, a scoop 6 may be provided, preferably also in the space 12 for the packaged probiotics 4.

As can be seen from figures 1 to 5, the packaged probiotics 4 and the scoop 6 are arranged such that the infant formula powder 3 cannot be accessed by the user before manipulating the package probiotics 4 and the scoop 6, such as for example removing them in order to open the compartment for the infant formula powder 3. In the shown example, the space 12 for the packaged probiotics 4 and the optional scoop 6 is arranged on top of the space for the preferably powdered infant formula 3.

When opening the container 2 e.g. by removing the closure 11, the user will at first be visibly confronted with the packaged probiotics 4 and optionally also the scoop 6, as the probiotics 4 are arranged in a space 12 which is positioned between the closure 12 of the common container 2 and the space for the infant formula powder 3.

In the example of figure 1 the probiotics 4 are packaged in a bottle 7.

In the example of figure 2 the probiotics are present as a single dose packages 8 which are physically associated with each other.

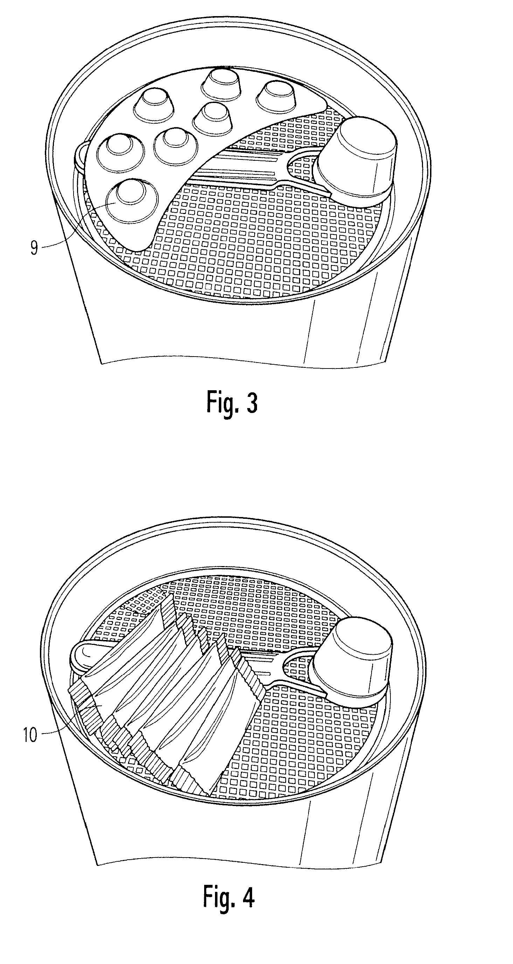

In the embodiment of figure 3 the package probiotics are provided in dry powder or compacted (tablet) form in a blister package 9.

Finally, in the embodiment of figure 4 the probiotics are present in individual sachets 10, which can be physically associated with each other or not.

In the embodiments of figures 2, 3 and 4 each individual packaging of the probiotics may constitute an individual dose.

In the embodiment of figure 1 the liquid or viscous probiotics will be released from the bottle 7 such that in discrete incremental amounts, wherein an integer number of these discrete incremental amounts represents the desired dose.

The probiotics are presented such that they are dispersable or soluble when reconstituted, together with the infant formula powder, with water.

In the embodiment of figure 1, the probiotics may be present as drops, wherein the probiotics itself are contained in an e.g. oily matrix.

The total amount of probiotics contained in the container 2 is matched with the packaging size of the infant formula 3.

The probiotics 4 are stored, within the common container, in proximity to the scoop 6.

The advantage of shown storage of the infant formula powder 3, the scoop 6 and the probiotics 4 is that the infant formula powder 3 is only accessible once the user has manipulated, and especially removed the scoop 6 and the package probiotics 4.

The probiotics can be present as liquid or viscous probiotics, optionally contained in an oily matrix which can be made e.g. from dry glycerides.

Alternatively the probiotics can be present in powdered or compacted dry form, and can optionally be microencapsulated.

The container may be provided with means for holding the scoop in an easily accessible way. In addition, also means for holding package probiotics 4 on the common container 2 be provided, such as for example a clip removably holding the package probiotics 4.

The partitioning element 5, which may be a wall such for example a membrane or foil and be partially or completely detachable in order to allow access to the compartment of the infant formula powder 3.

The infant formula kit is designed such that the resulting probiotic food formula dosage contains between 10e4 and 10e11, preferably between 10e6 and 10e10 CFUs (Colony forming Units) per feeding.

This can e.g. be achieved by providing a holding capacity (volume) h of the scoop and visibly distinct incremental amounts (volumes) a of the probiotics, such that, when *m* times the incremental amounts *a* of the probiotics are admixed to n times the scoop's capacity h of the infant formula, the desired probiotic food formula dosage with the cited CFU numbers is achieved.

Preferably the probiotics are non-sporeforming micro-organisms. Preferably the probiotics have a thermotolerance (heat resistance) such that heating above 50°C, 60°C or even 70°C has a lethal effect on them or at least drastically reduces the count of viable CFUs (e.g. one log reduction, equal to a factor of 10, when heated for more than 1 minute). Preferred representatives are lactic acid bacteria.

Examples of suitable probiotic micro-organisms include yeasts such as Saccharomyces, Debaromyces, Candida, Pichia and Torulopsis, moulds such as Aspergillus, Rhizopus, Mucor, and Penicillium and Torulopsis and bacteria such as the genera Bifidobacterium, Bacteroides, Clostridium, Fusobacterium, Melissococcus, Propionibacterium, Streptococcus, Enterococcus, Lactococcus, Staphylococcus, Peptostrepococcus, Bacillus, Pediococcus, Micrococcus, Leuconostoc, Weissella, Aerococcus, Oenococcus and Lactobacillus. Specific examples of suitable probiotic micro-organisms are: Saccharomyces cereviseae, Bacillus coagulans, Bacillus licheniformis, Bacillus subtilis, Bifidobacterium bifidum, Bifidobacterium infantis, Bifidobacterium longum, Enterococcus faecium, Enterococcusfaecalis, Lactobacillus acidophilus, Lactobacillus alimentarius, Lactobacillus casei subsp. casei, Lactobacillus casei Shirota, Lactobacillus curvatus, Lactobacillus delbruckii subsp. lactis, Lactobacil- 2Q lus farciminus, Lactobacillus gasseri, Lactobacillus helveticus, Lactobacillus johnsonii, Lactobacillus reuteri, Lactobacillus rhamnosus (Lactobacillus GG), Lactobacillus sake, Lactococcus lactis, Micrococcus varians, Pediococcus acidilactici, Pediococcus pentosaceus, Pediococcus 25 acidilactici, Pediococcus halophilus, Streptococcusfaecalis, Streptococcus thermophilus, Staphylococcus carnosus, and Staphylococcus xylosus.

The probiotic micro-organisms are preferably in powdered, dried form; especially in spore form for micro-organisms which form spores.

Further, if desired, 30 the probiotic micro-organism may be encapsulated to further increase the probability of survival; for example in a sugar matrix, fat matrix or polysaccharide matrix.

The infant formula kit of the invention can deliver advantageous effects at several levels:
In one embodiment of the invention the arrangement of the various parts ft he kit is such as to render the accessibility of the infant formula powder conditional to (a) a multi-step opening action by the user (linked to the multicompartment nature of the container) and/or (b) the displacement of and/or the physical "workaround" the container of probiotics and/or the scoop. This helps to insure that the user will actually consider the usage of the probiotic, and, when necessary, this will promote its use in the nutrition of the infant. The invention thus promotes a positive behavior by the users potentially leading to a better / more complete nutrition for the infants. Also this helps to preserve a significant level of safety in the usage of the kit by offering protection against un-desired/easy opening and physical protection (isolation of the infant formula from the outside environment, thus avoiding or reducing potential contaminations).

In one embodiment the kit of the invention promotes the convenience of usage of the kits elements: The user may show a decreased frequently of dosage error or uncertainty.

In one embodiment the container for probiotics and/or the scoop are physically separated from the compartment containing the infant formula. In most instances such elements (probiotics container, scoop) are handled by the user without much care, may be temporarily placed on an dirty surface or put in contact with contaminated external environment. In a conventional container the scoop or probiotic container are replaced in the infant formula container, in direct contact with the infant formula powder. The risk or transfer of dirt, micro-load or contaminant may be significant. The invention offers the advantage of proposing a response to these hygiene concerns: The separation of the compartments enhance the hygiene of the packaging and of its use: The direct contact of the elements of the kits are reduced or avoided.

In one embodiment of the invention the access to the parts of the kit is eased by their position and placement within the container. This is further emphasized when a recess, protrusion or protuberance the container (or its walls) has means for repositioning the scoop and/or probiotic container in dedicated positions, preferentially after the first use.

## Claims

1. An infant formula kit,
comprising, in one common container, but separated from each other by means of at least one partitioning element:
- multiple doses of an infant formula in powder form, and
- multiple doses of at least one type of probiotics, wherein the probiotics are present in its own packaging, wherein the packaging is designed such that the probiotic contained therein is released in discrete incremental amounts, the incremental amounts being visible to the human eye.

2. The infant formula kit according to claim 1,
wherein the partitioning element is a wall.

3. The infant formula kit according to claim 1 or 2,
wherein the probiotics are soluble or dispersible in the infant formula powder upon reconstitution with water.

4. The infant formula kit according to any of the preceding claims,
wherein the probiotics are present in dry form, e.g. as a powder or tablets, and preferably packaged in a blister packaging or individual or associated sachets.

5. The infant formula kit according to any of the preceding claims,
wherein the probiotics are present in single dose packages, which single dose packages are physically associated with each other.

6. The infant formula kit according to any of claims 1 to 3,
wherein the probiotic is present in liquid or viscous form, and is preferably packaged in a dropper or capsules.

7. The infant formula kit according to any of the preceding claims,
wherein the packaged probiotics are arranged in the common container such that they are visible to the consumer when the consumer seeks to access the infant formula.

8. The infant formula kit according to any of the preceding claims,
wherein the packaged probiotics and optionally also a scoop are arranged in the common container such that they are accessible, upon opening of the common container before the infant formula powder is accessible.

9. The infant formula kit according to claim 8,
wherein the packaged probiotics and/or the scoop hinder the access to the infant formula powder unless they are removed.

10. The infant formula kit according to any of the preceding claims,
wherein furthermore a scoop (6) is provided in the common container.

11. The infant formula kit according to claim 10,
wherein the holding capacity *h* of the scoop (6) and the incremental amounts a are set such that, when *m* times the incremental amounts *a* of the probiotics are admixed to *n* times the scoop's capacity *h* of the infant formula, the resulting probiotic food formula dosage contains between 10e4 and 10e11, preferably between 10e6 and 10e10 CFUs per feeding,
*m* and *n* being integer numbers equal to or greater than 1.

12. The infant formula kit according to claim 11,
wherein *m* is set to 1, i.e. an individually packaged dose of the probiotics (4) contains between 10e4 and 10e11, preferably between 10e6 and 10e10 CFUs.

13. The infant formula kit according to any of the preceding claims wherein the position of said container of probiotics and/or said scoop promotes the use of said probiotics.

14. The infant formula kit according to any of the preceding claims wherein the position of said container of probiotics and/or said scoop and/or said partitioning element isolates said infant formula powder from the environment.
